# EUROPEAN PATENT APPLICATION

(11) **EP 1 873 679 A2**
(43) Date of publication of application: **02.01.2008**
(21) Application number: 07012700.6
(22) Date of filing: 28.06.2007
(51) Int. Cl.: G06K 1/12, G06K 19/06

(54) **Barcode print data creation apparatus and barcode print data creation program stored in computer readable recording medium**

(30) Priority: 28.06.2006 JP 2006177715
(71) Applicant: Brother Kogyo Kabushiki Kaisha, Nagoya-shi, Aichi-ken 467-8561 (JP)
(72) Inventor: Niwa, Akihiko, c/o IP Dpt, Brother Kogyo KK, Aichi-ken 467-8562 (JP); Ishida, Minako, c/o IP Dpt, Brother Kogyo KK, Aichi-ken 467-8562 (JP); Ito, Chitoshi, c/o IP Dpt, Brother Kogyo KK, Aichi-ken 467-8562 (JP); Sawada, Akihiro, c/o IP Dpt, Brother Kogyo KK, Aichi-ken 467-8562 (JP); Ueno, Hideo, c/o IP Dpt, Brother Kogyo KK, Aichi-ken 467-8562 (JP)
(74) Representative: Feldmeier, Jürgen

(57) **Abstract**

This disclosure provides a barcode print data creation apparatus (1) and barcode print data creation program capable of using information described in the barcode more effectively. More specifically, one or a plurality of integration data (401) are created by processing read data (201, 202, 203) obtained by reading plural barcodes (101, 102, 103) so as to create processed data (301, 302, 303), integrating the processed data (301, 302, 303) or integrating the read data (201, 202, 203) according to a predetermined rule. Then, print data (501) for printing the barcode describing the integration data (401) is created. The "processing" includes "selection of items", "addition of items", "sorting of data" and "classification of data".

## Description

The present invention relates to a barcode print data creation apparatus and a barcode print data creation program stored in a computer readable recording medium. In particular the invention relates to such an apparatus and program for combining and separating a plurality of barcode printdata.

Conventionally, the barcodes such as a one-dimensional barcode and a two-dimensional barcode have been used in a variety of scenes. The barcode has a feature that it allows more information than printed with characters to be printed on such a medium as paper and a further feature that it can be used for various information processing easily because it can be read easily. For example, the barcode is printed on a product package or an attached label and at a checkout counter of a retailer such as supermarket, the barcode is used for summing prices of products bought by customer and management of products by reading the barcode when customer purchases the products. Recently, the use of the barcode has spread over another field. According to an article delivery verification system described in Japanese Patent Application Laid-Open No.2001-266092, each of two barcodes composed of a single barcode originally is printed on each half section of a tag separable to two sections. Then, the barcode of each of the two half sections is read to restore the original barcode. Information described therein is read and verified with registered information in order to verify a combination of the half sections. According to a barcode management method described in Japanese Patent No. 2573778, a single barcode is created by combining plural barcodes (mail delivery number and slip number) describing different kinds of information. Then, a code (mail delivery number) indicating other combined barcode is retrieved from a code (slip number) indicated by the barcode which constitutes that final barcode or a variety of information pieces (kind, weight and the like of mail) accompanying these codes are verified. According to a barcode processing method described in Japanese Patent Application Laid-Open No.2004-181945, the same barcode as a read barcode is printed by a barcode processing unit having a barcode reading function and a print function so as to create a duplicate of the barcode.

The use of the barcode has been expected to expand further in fields of application of information described in the barcode. Although, for example, in the barcode management method described in Japanese Patent No. 2573778, information pieces described in a plurality of barcodes are gathered to be used as a single barcode, this invention proposes only creating of the barcode just by combining information pieces. Further, in the barcode management method described in Japanese Patent Application Laid-Open No.2004-181945, the barcode is only duplicated. For example, according to these publications, it is impossible to create the barcode by gathering only specific information from information pieces described in the plural barcodes or create plural barcodes describing specific kind of information from information described in a single barcode. That is, there is such a problem that information described in the barcode cannot be used sufficiently.

The present disclosure has been achieved to solve the above-described problem and an object of the disclosure is to provide a barcode print data creation apparatus capable of using information described in the barcode more effectively and a barcode print data creation program stored in a computer readable recording medium.

This object is solved by the features of claims 1, 8 and 18 and the steps of program claims 19, 26 and 36. Further advantageous embodiments are subject-matter of the dependent claims.

To achieve the above-described object, according to a first aspect of this disclosure a barcode print data creation apparatus comprising: a read data memory unit that stores a plurality of read data obtained by reading a barcode; a data format memory unit that stores a data format constituted of data items for dividing and discriminating the values of the read data stored in the read data memory unit by each item; and a control unit that executes at least one of selection processing of selecting at least a data item from the data items of the data format stored in the data format memory unit and addition processing of adding a new data item to the data format; edits a value corresponding to the data item selected or added by each of the processings about the plural read data stored in the read data memory unit so as to edit the plural read data into a single integrated data; creates integrated barcode data for creating integration barcode describing the integration data edited; and creates barcode print data for printing the integration barcode based on the integration barcode data created.

According to a second aspect of this disclosure, there is provided a barcode print data creation apparatus comprising: a read data memory unit that stores read data obtained by reading a barcode; and a control unit that edits a plurality of division data by dividing the read data stored in the read data memory unit; creates division barcode data for creating the division barcode describing each of the edited division data; and creates the barcode print data for printing the division barcode based on the division barcode data created.

According to a third aspect of this disclosure, there is provided a barcode print data creation apparatus comprising: a read data memory unit that stores a plurality of read data obtained by reading a barcode; a data format memory unit that stores a data format constituted of data items for dividing and discriminating the values of the read data stored in the read data memory unit by each item; and a control unit that executes at least one of selection processing of selecting at least a data item from the data items of the data format stored in the data format memory unit and addition processing of adding a new data item to the data format; edits a value corresponding to the data item selected or added by each of the processings about the plural read data stored in the read data memory unit so as to edit the plural read data into a single integration data; creates integration barcode data for creating integration barcode describing the edited integration data; edits the read data stored in the read data memory unit by dividing so as to edit the plural division data; creates division barcode data for creating division barcode each describing the division data edited by dividing; and creates barcode print data for printing the integration barcode based on the integration barcode data created or creates barcode print data for printing the division barcode based on the division barcode data created.

According to a fourth aspect of this disclosure, there is provided a barcode print data creation program stored in a computer readable recording medium of: storing a plural read data obtained by reading a barcode; performing at least one of selection processing of selecting at least a data item from the data items in the data format constituted of data items for dividing and discriminating the values of the stored read data by each item and addition processing of adding a new data item to the data format; editing a value corresponding to the data item selected or added by each of the processings about the plural read data stored so as to edit the plural read data into a single integration data; creating the integration barcode data for creating the integration barcode describing the edited integration data; and creating the barcode print data for printing the integration barcode based on the created integration barcode data.

According to a fifth aspect of this disclosure, there is provided a barcode print data creation program recorded in a computer readable recording medium, of: storing read data obtained by reading a barcode; editing a plurality of division data by dividing the stored read data; creating division barcode data for creating the division barcode describing each of the edited division data; and creating the barcode print data for printing the division barcode based on the created division barcode data.

According to a sixth aspect of this disclosure, there is provided a barcode print data creation program recorded in a computer readable recording medium, of: storing a plurality of read data obtained by reading a barcode; executing at least one of selection processing of selecting at least a data item from the data items in the data format constituted of data items for dividing and discriminating the values of the stored read data by each item and addition processing of adding a new data item to the data format; editing a value corresponding to the data item selected or added by each of the processings about the plural stored read data so as to edit the plural read data into a single integration data; creating integration barcode data for creating integration barcode describing the edited integration data; editing the stored read data by dividing so as to edit the plural division data; creating division barcode data for creating division barcode each describing the edited division data by dividing; and creating barcode print data for printing the integration barcode based on the created integration barcode data or creating barcode print data for printing the division barcode based on the created division barcode data.

Exemplary embodiments of the disclosure will be described below in detail with reference to the accompanying drawings in which:

FIG. 1 is a block diagram showing the electrical configuration of a print data creation apparatus;
FIG. 2 is an explanatory diagram for explaining the relation of data in integration processing;
FIG. 3 is a schematic diagram showing the configuration of processed data;
FIG. 4 is a schematic diagram showing the configuration of integrated data;
FIG. 5 is a schematic diagram showing the configuration of processed data;
FIG. 6 is a schematic diagram showing the configuration of integrated data;
FIG. 7 is a schematic diagram showing the configuration of integrated data;
FIG. 8 is a schematic diagram showing the configuration of integrated data;
FIG. 9 is an explanatory diagram for explaining the relation of data in division processing;
FIG. 10 is an explanatory diagram for explaining the relation of data in subtraction processing;
FIG. 11 is a schematic diagram showing the configuration of ROM;
FIG. 12 is a schematic diagram showing the configuration of RAM;
FIG. 13 is a schematic diagram showing the configuration of EEPROM;
FIG. 14 is a flowchart of integrated selection processing which processes "item selection" in "integrated processing";
FIG. 15 is a flowchart of integrated addition processing which processes "item addition" in "integrated processing";
FIG. 16 is a flowchart of integrated sort processing which executes "sorting of data" in "integrated processing";
FIG. 17 is a flowchart of integrated classifying processing which executes "classifying of data" in "integrated processing";
FIG. 18 is a flowchart of "division processing"; and
FIG. 19 is a flowchart of "subtraction processing".

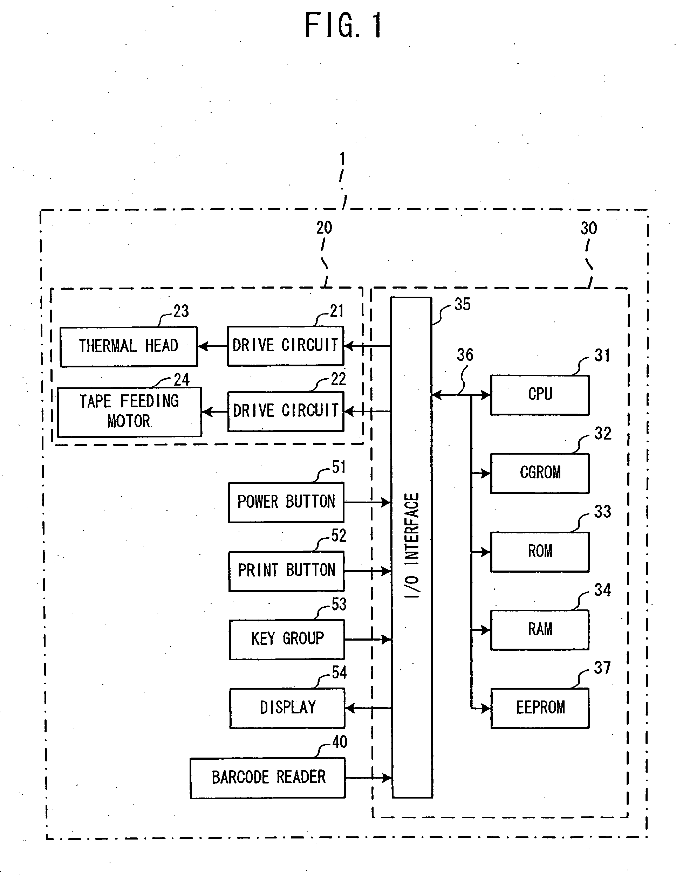

Hereinafter the exemplary embodiments of the present disclosure will be described with reference to the accompanying drawings. A print data creation apparatus 1 of this embodiment is provided with a barcode reader 40 and a tape print mechanism 20 (see FIG. 1). The print data creation apparatus 1 creates a barcode by editing data (hereinafter referred to as read data) described on a barcode read by the barcode reader 40 and print that barcode with the tape print mechanism 20.

As shown in FIG. 1, the print data creation apparatus 1 includes a main control board 30. The main control board 30 includes a CPU 31 for executing main control of the print data creation apparatus 1. A CGROM 32, ROM 33, RAM 34, I/O interface 35 and EEPROM 37 which is a nonvolatile memory are connected to the CPU 31 through data bus 36. In the meantime, the CGROM 32 stores graphic data such as characters, symbols. The ROM 33 stores a control program. The RAM 34 stores a flag and the like (the graphic data of the CGROM 32 and the control program of the ROM 33 are stored "from the beginning" and a flag of the RAM 34 is stored initially "upon usage"). The print data creation apparatus 1 has the tape print mechanism 20 including a thermal head 23 which prints characters on a printing object, a drive circuit 21 for the thermal head 23, a tape feeding motor 24 for rotating a platen roller (not shown) for carrying the printing object and a drive circuit 22 for the same tape feeding motor 24.

As shown in FIG. 1, a drive circuit 21 for driving the thermal head 23, a drive circuit 22 for driving the tape feeding motor 24, a power button 51 which instructs ON/OFF of the power supply, a print button 52 which instructs execution of print, a key group 53 which inputs an instruction to the print data creation apparatus 1, a display 54 which displays a message or a menu screen, and a barcode reader 40 are connected to the I/O interface 35 of the print data creation apparatus 1. In the meantime, the barcode reader 40 is a known barcode reading unit, which includes a light emitting portion such as LED, laser beam and a barcode image detecting portion such as CCD image sensor having a light receiving portion for receiving reflection light of light projected by the light emitting portion.

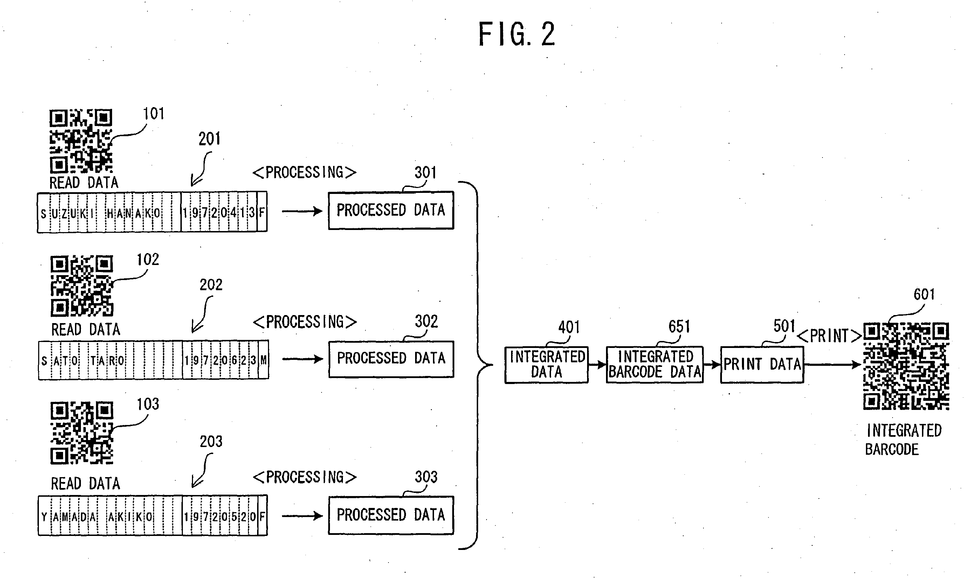

Next, edit of read data executed by the print data edit apparatus of this embodiment will be described with reference to FIGS. 2-10. First, the integrated processing will be described. In the integrated processing, single data (hereinafter referred to as integrated data) is created by combining plural read data so as to create print data for printing a barcode. Next, the division processing will be described. In the division processing, plural data (hereinafter referred to as division data) are created from a single read data so as to create print data for printing plural barcodes. Next, the subtraction processing will be described. In the subtraction processing, data from which information existing on one side but not on the other is extracted (hereinafter referred to as subtraction data) is created from two barcodes created from the integrated data so as to create print data for printing the barcode of the subtraction data.

First, the integrated processing will be described with reference to FIGS. 2-8.

In this integrated processing, processed data is created by processing read data obtained by reading plural barcodes. Then, one or plural integrated data are created by integrating the processed data or integrating the read data according to a predetermined rule. Consequently, print data for printing the barcode (hereinafter referred to as integrated barcode) describing the integrated data is created. Some processings can be considered here. The first is "selection of items", the second is "addition of items", the third is "sorting of data" and the fourth is "classification of data".

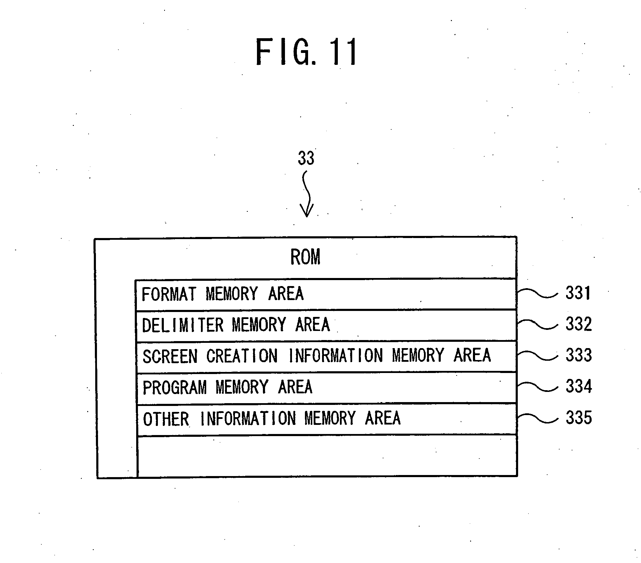

First, the integration processing by "selection of items" will be described with reference to FIGS. 2-4. Here, the integrated barcode 601 is created from three barcodes 101, 102, and 103. Data read from the barcode 101 is read data 201, data read from the barcode 102 is read data 202 and data read from the barcode 103 is read data 203. In this example, the read data 201, 202, and 203 are constituted of 15-digit text data, 8-digit numeric data. Formats of the read data 201, 202, and 203 are previously stored in a format memory area 331 (see FIG. 11) of the ROM 33 of the print data creation apparatus 1. Here, assume that the text data of the first 15 digits is an item "name", the numeric data of second 8 digits is an item "birth date" and the last one digit is an item "sex". In the meantime the read data has a header portion which specifies the kind of format as well as the data portion in which these information pieces are described. A format stored in the format memory area 331 is read out based on information of this header portion.

In the read data 201, as shown in FIG. 2, the item "name" is "SUZUKI HANAKO (subsequent 2 digits are space)", the item "birth date" is "19720413" in numeral and the item "sex" is "F" meaning "female". Then, in the read data 202, the item "name" is "SATO TARO (subsequent 6 digits are space)", the item "birth date" is "19720623" in numeral and the item "sex" is "M" meaning "male". Then, in the read data 203, the item "name" is "YAMADA AKIKO (subsequent 3 digits are space)", the item "birth date" is "19720520" in numeral, and the item "sex" is "F" meaning "female".

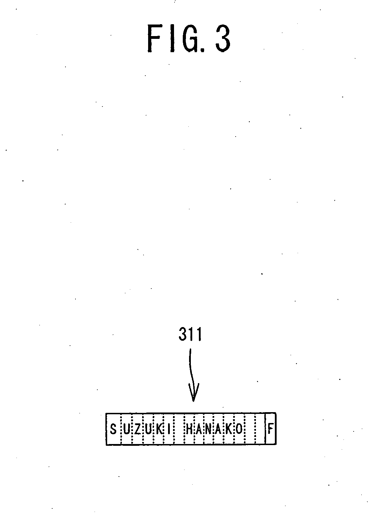

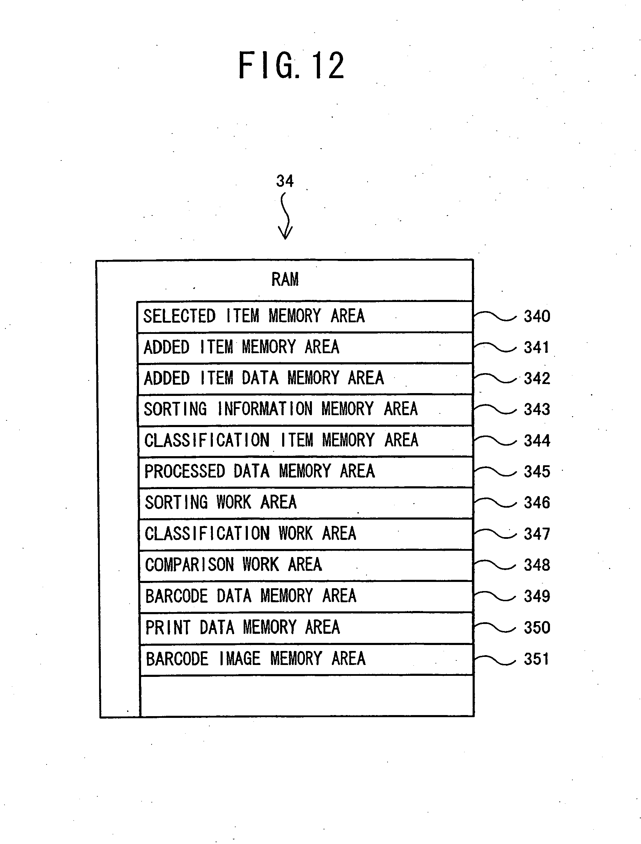

The read data 201, 202, and 203 are subjected to processing by "selection of items", so that processing data 301, 302, and 303 are created respectively. Here, the items "name" and "sex" are selected. An example that the "selection of items" of the processing data 301 obtained by processing the read data 201 is carried out is processed data 311 as shown in FIG. 3. As shown in FIG. 3, it is constituted of only the selected items "name" and "sex" in the read data 201. In the read data 201, first the item "name" data with 15-digit text data, "SUZUKI HANAKO" (subsequent 2 digits are space) comes and next, the item "sex" with 1-digit text data "F" meaning "female" comes. In the meantime, the read data 202, 203 are processed to only the item "name" and item "sex". The processed data is stored in a processed data memory area 345 (see FIG. 12) of the RAM 34 of the print data creation apparatus 1.

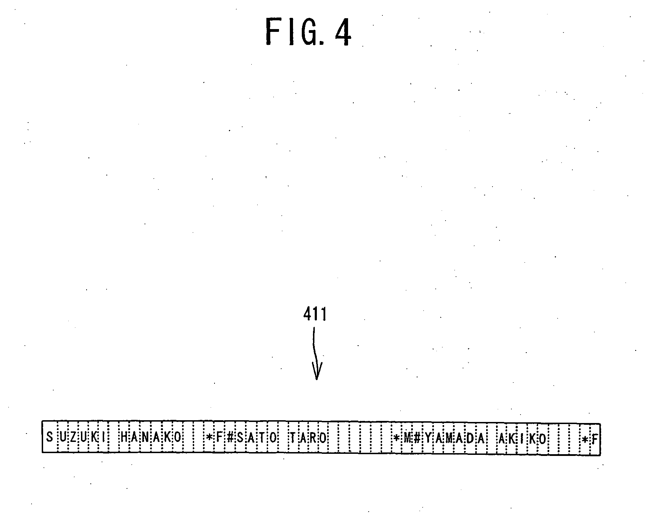

The processed data 301, 302, and 303, processed in this way are integrated to create an integrated data 401. The integrated data 411 shown in FIG. 4 is an example of the integrated data 401 when the "selection of items" is carried out. As shown in FIG. 4, the integrated data 411 is a result of combination of the processed data 301, 302, and 303 in order. In the meantime, to indicate a delimiter of original processed data, delimiter "#" is inserted as a delimiter of data between the processed data 301, 302, and 303 and a delimiter "*" is inserted as a delimiter of the item. By inserting the a delimiter, the configuration of the data item can be known even if its format is not distinguished when a printed integrated barcode is read.

Thus, in the integrated data 401, first, the item "name" with 15-digit text data, "SUZUKI HANAKO" (subsequent 2 digits are space) comes followed by the item delimiter "*", the item "sex" data, "F" meaning "female", data delimiter "#". Next, the item "name", 15-digit text data "SATO TARO" (subsequent 6 digits are space) comes followed by the item delimiter "*", the item "sex" data, "M" meaning "male", and data delimiter "#". Next, the item "name", 15-digit text data "YAMADA AKIKO" (subsequent 3 digits are space) comes, followed by the item delimiter "*" and item "sex" data, "F" meaning "female".

Integrated barcode data 651 is created to create integrated barcode 601 which uses this integrated data 401 as description information. This integrated barcode data 651 is constituted of the kind of the barcode and items which need to be set according to the kind of the barcode (for example, version, size, security level and the like) as well as the description information and stored in the barcode data memory area 349 (see FIG. 12) of the RAM 34 of the print data creation apparatus 1. Then, print data 501 for printing the integrated barcode 601 to be created based on the integrated barcode data 651 is created. This print data 501 is constituted of control information for the thermal head 23 which uses the integrated barcode 601 to be formed as an image and to be a print result and control information for the tape feeding motor 24 for controlling conveyance of the tape which is a printing object. The print data 501 is stored in the print data memory area 350 (see FIG. 12) of the RAM 34 of the print data creation apparatus 1. Then, when printing of this print data 501 is carried out by the tape print mechanism 20, the integrated barcode 601 which is a print result is obtained.

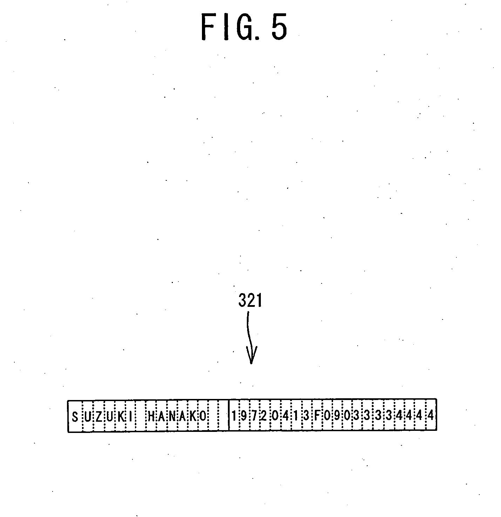

Next, the integration processing by "addition of items" will be described with reference to FIGS. 2, 3, and 5. Here, an example of creating the integrated barcode 601 from three barcodes 101, 102, and 103 shown in FIG. 2 will be described. Processing of "addition of items" is carried out on the read data 201, 202, and 203 so as to create each of the processed data 301, 302, and 303. Here, assume that the item "telephone number" is added. If a name of an item to be specified, the kind of data and the number of digits are instructed by user, an area for the item "telephone number" is secured and after that, a value to be stored in the item "telephone number" is input by user. An example of a case where the processed data 301 as a result of processing the read data 201 is added is processed data 321 indicated in FIG. 5. The processed data 321 is constituted of the item "telephone number" as well as the original items "name", "birth date" and "sex" as shown in FIG. 5. First, the item "name", 15-digit text data "SUZUKI HANAKO" (subsequent 2 digits are space) comes followed by the item "birth date" "19720413" in numerals and item "sex" "F" meaning "female". Next, the item "telephone number" comes as "09033334444" in numerals. In the meantime, the read data 202, 203 are processed by adding the item "telephone number" to the item "name", the item "birth date" and the item "sex" so as to create the processed data 302 and 303. The processed data is stored in the processed data memory area 345 (see FIG. 12) of the RAM 34 of the print data creation apparatus 1.

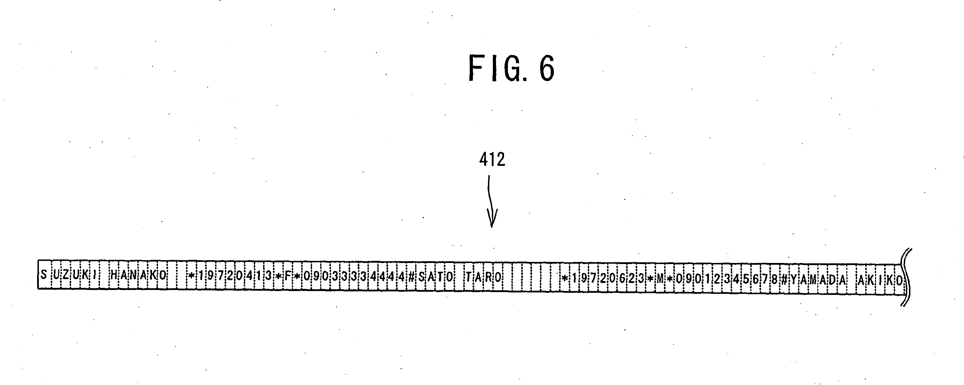

The processed data 301, 302, and 303, processed in this way, are integrated to create the integrated data 401 as shown in FIG. 2. An integrated data 412 shown in FIG. 6 is an example of case where the "addition of items" is carried out. As shown in FIG. 6, the integrated data 412 is a result of combining the processed data 301, 302, and 303 in order. To indicate a delimiter in original processed data, like the case of the "selection of items", a symbol "#" is inserted into the integrated data 412 as data delimiter between each of the processed data 301, 302, and 303 and a symbol "*" is inserted as a delimiter of the item. Thus, in the integrated data 401, first the item "name" 15-digit text data "SUZUKI HANAKO" (subsequent 2 digits are space) comes followed by an item delimiter "*", item "birth date" data "19720413" of 8-digit numeral, an item delimiter "*", item "sex" data "F" meaning "female", an item delimiter "*", item "telephone number" data "09033334444" of 11-digit numeral, and a data delimiter "#". Next, the item "name" data "SATO TARO (subsequent 6 digits are space)" of 15-digit text data comes, followed by an item delimiter "*", item "birth date" data "19720623" of 8-digit numeral, item delimiter "*", item "sex" data "M" meaning "male", item delimiter "*", item "telephone number" data "09012345678" of 11-digit numeral and data delimiter "#". Next, the item "name" data "YAMADA AKIKO (subsequent 3 digits are space)" of 15-digit text data comes. Although representation of following data is omitted in FIG. 6, the item delimiter "*", item "birth date" data "19720520" of 8-digit numeral, item delimiter "*", item "sex" data "F" meaning "female", item delimiter "*" and item "telephone number" data "09065659898" of 11-digit numeral come so that the processed data 302, 303 come in order.

Like the case of "selection of items", the integrated barcode data 651 for creating the integrated barcode 601 which uses this integrated data 401 as description information is created. Then, the print data 501 for printing the integrated barcode 601 to be created based on the integrated barcode data 651 is created. Then, when print is carried out with the tape print mechanism 20, the integrated barcode 601 is obtained as a print result.

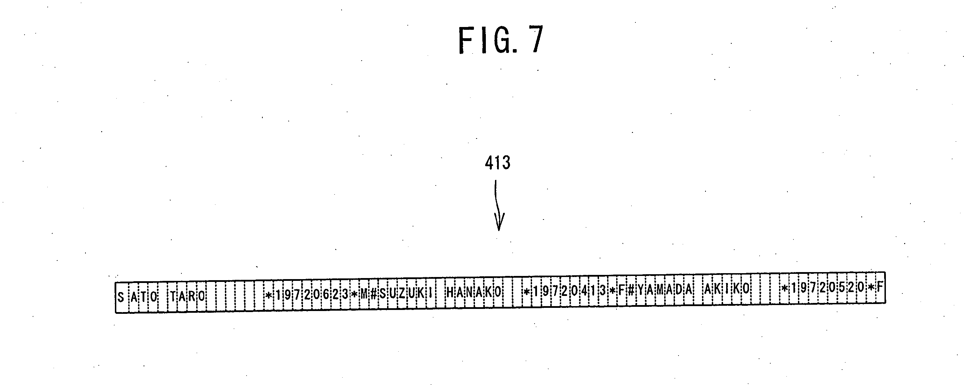

Next, "sorting of data" will be described with reference to FIGS. 2 and 7. An example of case of creating the integrated barcode 601 from the three barcodes 101, 102, and 103 shown in FIG. 2 will be also described. Here, no processed data 301, 302, and 303 are created from the read data 201, 202, and 203 but the integrated data 401 is created by sorting the read data 201, 202, and 203. Items for use as reference for sorting (hereinafter referred to as "sorting item") and ascending order/descending order are specified by user.

Here, assume that the item which serves as a reference of sorting is "name" and the order of sorting is "descending order". Integrated data 413 shown in FIG. 7 is an example of the integrated data 401 when "sorting of data" is carried out. In this case, as shown in FIG. 7, the integrated data 413 is a combination of the read data 202, 201, 203 in order and like the case of "selection of items", to indicate a delimiter in the original processed data, a symbol "#" is inserted among the processed data 301, 302 and 303 as a delimiter of data and then, a symbol "*" is inserted as a delimiter of each item.

Thus, in the integrated data 413, first, the item "name", 15-digit text data "SATO TARO" (subsequent 6 digits are space) comes, followed by an item delimiter "*", item "birth date" data, 8-digit numeral "19720623", item delimiter "*", item "sex" data "M" meaning "male", data delimiter "#". Next, the item "name" data, 15-digit text data "SUZUKI HANAKO" (subsequent 2 digits are space) comes followed by an item delimiter "*", item "birth date" data, 8-digit numeral "19720413", item data delimiter "*", item "sex" data "F" meaning "female", data delimiter "#". Then, an item "name" data, 15-digit text data "YAMADA AKIKO" (subsequent 3 digits are space) comes followed by an item delimiter "*", item "birth date" data, 8-digit numeral data "19720520", item delimiter "*" and item "sex" data "F" meaning "female".

Like the case of "selection of items", the integrated barcode data 651 for creating the integrated barcode 601 which uses this integrated data 401 as description information is created. Then, the print data 501 for printing the integrated barcode 601 created based on the integrated barcode data 651 is created. Then, when print is carried out with the tape print mechanism 20, the integrated barcode 601 is obtained as a result of the print.

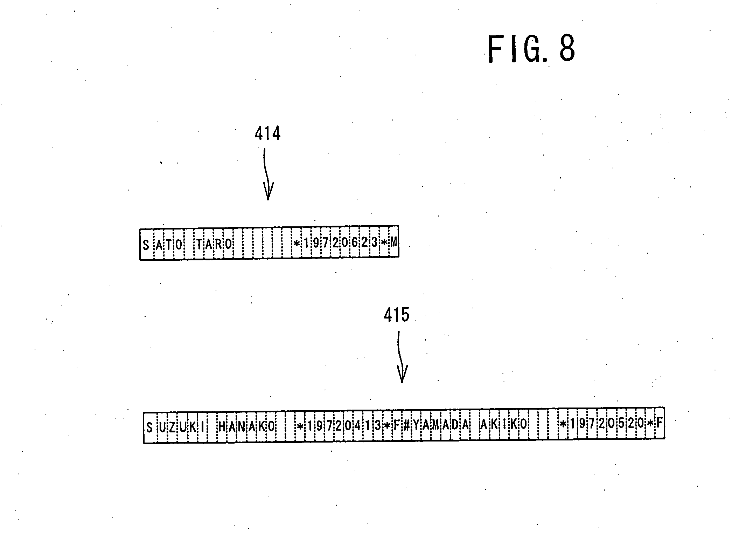

Next, "classification of data" will be described with reference to FIGS. 2 and 8. Here also, an example of creating the integrated barcode 601 from the three barcodes 101, 102, and 103 shown in FIG. 2 will be described. Here, no processed data 301, 302, and 303 are created from the read data 201, 202, and 203 but the read data 201, 202, and 203 are classified based on the value of a predetermined item and the integrated data 401 is created for each of the read data classified based on the value of the item. That is, if three kinds of the item values exist, three integrated data 401 are created. The item which serves as reference of classifying (hereinafter referred to as classifying item) is instructed by user.

Here, assume that the item which serves as reference for classifying is "sex". The integrated data 414, 415 shown in FIG. 8 are an example of the integrated data 401 in case where "classifying of data" is carried out. In this case, as shown in FIG. 8, two integrated data, that is, the integrated data 414 in which the item "sex" is "male" and the integrated data 415 in which item "sex" is "female", are created. Like case of "selection of items", to indicate a delimiter of the original processed data, each symbol "#" is inserted among the processed data 301, 302 and 303 as a delimiter of data and a symbol "*" is inserted as an item delimiter.

Thus, as shown in FIG. 8, in the integrated data 414, first, the item "name" data, 15-digit text data "SATO TARO" (subsequent 6 digits are space) comes followed by the item delimiter "*", item "birth date" data, 8-digit numeral "19720623", item delimiter "*" and item "sex" data "M" meaning "male". On the other hand, in the integrated data 415, the item "name" data, 15-digit text data "SUZUKI HANAKO" (subsequent 2 digits are space) comes followed by the item delimiter "*", item "birth date" data, 8-digit numeral "19720413", item delimiter "*", item "sex" data "F" meaning "female", and data delimiter "#". Next, item "name" data 15-digit text data "YAMADA AKIKO" (subsequent 3 digits are space), item delimiter "*", item "birth date" data, 8-digit numeral "19720520", item delimiter "*" and item "sex" data "F" meaning "female".

Then, like "selection of items", the integrated barcode data 651 for creating the integrated barcode 601 which uses this integrated data 401 as description information is created. Then, the print data 501 for printing the integrated barcode 601 created based on the integrated barcode data 651 is created. Then, when print is carried out with the tape print mechanism 20, the integrated barcode 601 is obtained as a result of the print.

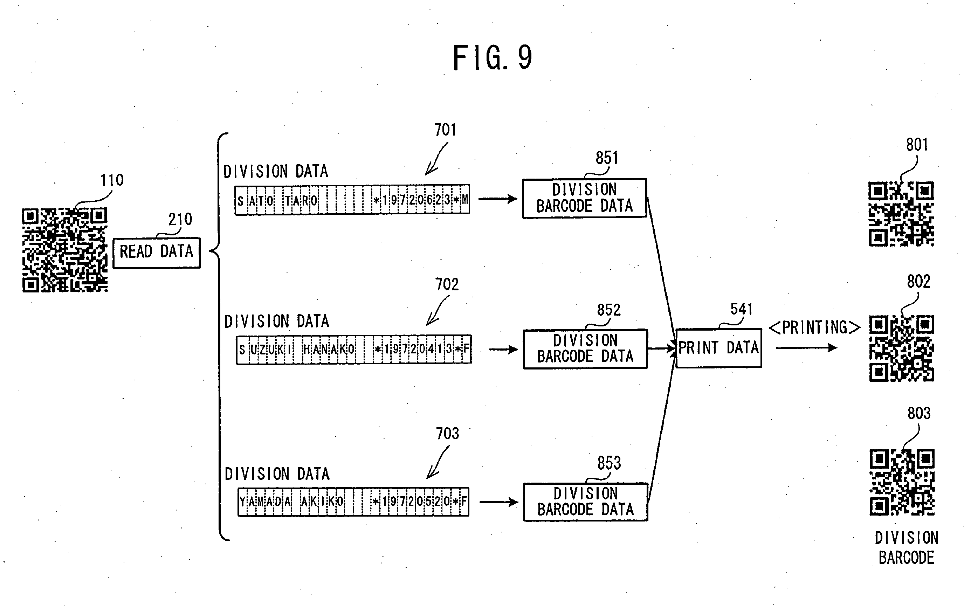

Next, the division processing will be described with reference to FIG. 9. In this "division processing", read data obtained by reading a barcode is divided into plural division data. Then, the print data for printing the barcode (hereinafter referred to as division barcode) describing the division data is created.

Here, three division barcodes 801, 802, and 803 are created from a barcode 110. Data read from the barcode 110 is read data 210. In this example, assume that the barcode 110 is a barcode describing the integrated data 413 shown in FIG. 7. Thus, in the read data 210, like the integrated data 413 shown in FIG. 7, first, item "name", 15-digit text data "SATO TARO" (subsequent 6 digits are space) comes followed by an item delimiter "*", item "birth date" data, 8-digit numeral "19720623", item delimiter "*", item "sex" data "M" meaning "male", and a data delimiter "#". Next, item "name" data, 15-digit text data "SUZUKI HANAKO" (subsequent 2 digits are space) comes followed by an item delimiter "*", item "birth date" data, 8-digit numeral "19720413", item delimiter "*", item "sex" data "F" meaning "female", and a data delimiter "#". Next, item "name" data, 15-digit text data "YAMADA AKIKO" (subsequent 3 digits are space) comes, followed by an item delimiter "*", item "birth date" data, 8-digit numeral "19720520", an item delimiter "*" and item "sex" data "F" meaning "female".

The read data 210 is divided by the data delimiters "#" so that the division data 701, 702, and 703 are created. In the division data 701, as shown in FIG. 9, item "name" data, 15-digit text data "SATO TARO" (subsequent 6-digits are space) comes followed by an item delimiter "*", item "birth date" data, 8-digit numeral "19720623", item delimiter "*", and item "sex" data "male" in a one-digit. In the division data 702, item "name" data, 15-digit text data "SUZUKI HANAKO" (subsequent 2 digits are space) comes followed by item delimiter "*", item "birth date" data, 8-digit numeral "19720413", item delimiter "*" and item "sex" data "female" in a one-digit. In the division data 703, item "name" data, 15-digit text data "YAMADA AKIKO" (subsequent 3 digits are space) comes followed by an item delimiter "*", item "birth date" data, 8-digit numeral "19720520", item delimiter "*" and item "sex" data "female" in a one-digit.

Then, division barcode data 851, 852, and 853 for creating division barcodes 801, 802, and 803 which adopt the division data 701, 702, and 703 as description information are created. The division barcode data 851, 852, and 853 are constituted of the kind of the barcode and items which need to be set depending on the kind (for example, version, size, security level and the like) as well as description information and stored in the barcode data memory area 349 (see FIG. 12) of the RAM 34 of the print data creation apparatus 1. Then, the print data 541 for printing the division barcodes 801, 802, and 803 created based on the division barcode data 851, 852, and 853 is created. This print data 541 is constituted of control information of the thermal head 23 which creates the division barcodes 801, 802, and 803 formed as an image as a print result and control information of the tape feeding motor 24 for controlling conveyance of tape which is a printing object. The print data 541 is stored in the print data memory area 350 (see FIG. 12) of the RAM 34 of the print data creation apparatus 1. Then, when print of this print data 541 is executed with the tape print mechanism 20, the division barcodes 801, 802, and 803 are obtained as a result of printing.

In the meantime, in the division processing (not shown), processings such as "selection of items", "addition of items", "sorting of data" "classification of data" and the like may be carried out. For example, as for "selection of items", when creating the division data 701, 702, and 703 from the read data 210, user selects an item which is adopted as a division data and creates the division data with only the selected item. Then, as for "addition of items", when creating the division data 701, 702, and 703 from the read data 210, user selects an item to be added to the division data and inputs values to be described in each division data so as to create the division data. As for "sorting of data", a predetermined item of the division data is sorted in a predetermined order and creates the print data 541 so that it is printed in an order of that sorting. Further, as for "classification of data", the division data is classified based on a predetermined item value and the print data is created for each classified division data. In this case, user needs to specify an item which serves as the reference for classification. Then, print data for only the kinds of the values of that item are created. Unless the print data are prepared separately, when the classification is different, an interval between the division barcodes may be enlarged or when the classification is different, a predetermined symbol, character or line may be printed between the printed division barcodes. Although in division processing in the above-described embodiment, print data for printing plural division barcodes is created from plural division barcode data, plural print data may be created for each of the division barcode data.

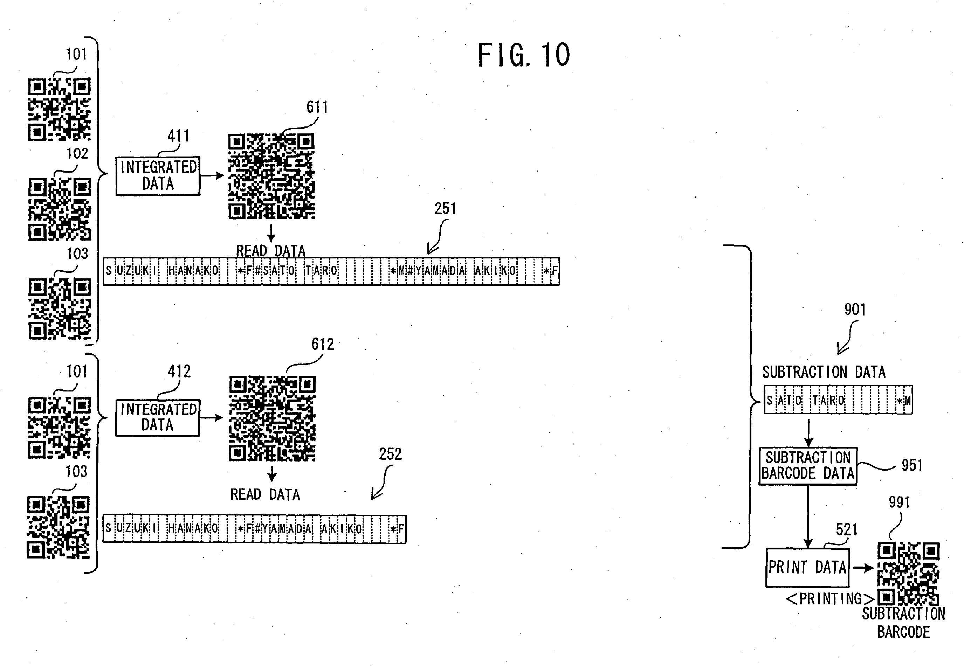

Next, the subtraction processing will be described with reference to FIG. 10. In this "subtraction processing", information about the subtraction is extracted from two read data in which two integrated barcodes are read and print data for printing the barcode (hereinafter referred to as subtraction barcode) describing the subtraction data is created.

Here, an example of creating a subtraction barcode 991 from the integrated barcode 611 created from the three barcodes 101, 102, and 103 and the integrated barcode 612 created from the two barcodes 101 and 103 will be described. Like the examples described with reference to FIGS. 2, 3 and 4, the integrated barcode 611 is a barcode which adopts the integrated data 411 created by selecting the item "name" and item "sex" by "selection of items" in the integrated processing as description information in the read data 201, 202, and 203 read from the barcodes 101, 102, and 103 respectively. Then, the integrated barcode 612 is as well a barcode which adopts the integrated data 412 created from the read data 201, 203 read respectively from the barcodes 101 and 103 in "item selection" in the integration processing as description information. That is, when the integrated barcode 611 and the integrated barcode 612 are compared with each other, it comes that the integrated barcode 612 has fewer information by an amount corresponding to information of the barcode 102 than the integrated barcode 611.

Because the read data 251 and 252 obtained by reading the integrated barcodes 611 and 612 created in this way contains data delimiter "#" in its original data, the content of each original data can be compared. In the read data 251 shown in FIG. 10, the first data is "SUZUKI HANAKO" as "name", the second data is "SATO TARO" and the third data is "YAMADA AKIKO". Then, in the read data 252, the first data is "SUZUKI HANAKO" as "name", and the second data is "YAMADA AKIKO". Thus, the second data of the read data 251 in which the "name" is "SATO TARO" and the "sex" is "male" is extracted as subtraction data 901.

' Then, subtraction barcode data 951 for creating subtraction barcode 991 which adopts this subtraction data 901 as description information is created. Then, the print data 521 for printing the subtraction barcode 991 created based on the subtraction barcode data 951 is created.

Next, print data creating processing which is executed in the print data creation apparatus 1 will be described with reference to FIGS. 11-19.

First, a memory area provided in the ROM 33 will be described with reference to FIG. 11. As shown in FIG. 11, the ROM 33 includes a format memory area 331, a delimiter memory area 332, a screen creation information memory area 333, program memory area 334, and other information memory area 335, etc. A format of read data read from the barcode is stored in the format memory area 331. Delimiters including data delimiter and item delimiter are stored in the delimiter memory area 332. Information concerning a screen to be displayed on the display 54 is stored in the screen creation information memory area 333. A program which operates in the print data creation apparatus 1 is stored in the program memory area 334. A variety of information which the program uses is stored in the other information memory area 335.

Next, memory area provided in the RAM 34 will be described with reference to FIG. 12. As shown in FIG. 12, the RAM 34 includes a selected item memory area 340, added item memory area 341, added item data memory area 342, sorting information memory area 343, classification item memory area 344, processed data memory area 345, sorting work area 346, classification work area 347, comparison work area 348, barcode data memory area 349, print data memory area 350, barcode image memory area 351 and the like.

Information for discriminating an item selected as an item for use in integrated data is stored in the selected item memory area 340 when processing of "selection of items" is carried out in "integration processing". Then, information for discriminating an added item when processing of "addition of items" is carried out in the "integration processing" is stored in the added item memory area 341 and the value of an added item is stored in the added item data memory area 342 for each data. Then, information for discriminating a sorted item and sorting order are stored in the sorting information memory area 343 and information for discriminating a classification item is stored in the classification item memory area 344. In the case of processing of "selection of items" or "addition of items" is carried out, processed data after processing the read data is stored in the processed data memory area 345. Then, the sorting work area 346 is used as a work area for use in sorting when the "sorting of data" is carried out and the classification work area 347 is used as a work area for classification when the "classification of data" is carried out. The comparison work area 348 is used as a work area for use in comparison of two read data in "subtraction processing". Further, barcode data is stored in the barcode data memory area 349 with integration data, division data or subtraction data adopted as description information. Print data is stored in the print data memory area 351 and image data of barcode read by the barcode reader 40 is stored in the barcode image memory area 351.

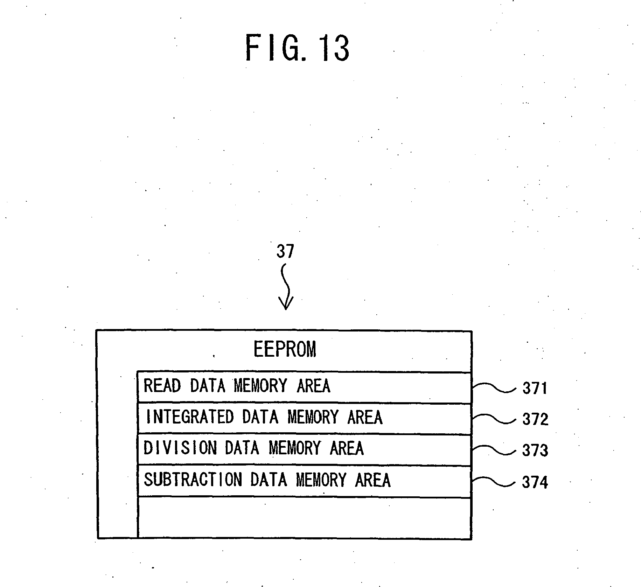

Next, memory area provided in the EEPROM 37 will be described with reference to FIG. 13. As shown in FIG. 13, the EEPROM 37 includes a read data memory area 371, integration data memory area 372, division data memory area 373, subtraction data memory area 374 and the like. Read data obtained by analyzing image data of a barcode stored in the memory area 351 with barcode image in the RAM 34 is stored in the read data memory area 371. Integration data is stored in the integrated data memory area 372, the division data is stored in the division data memory area 373 and the subtraction data is stored in the subtraction data memory area 374.

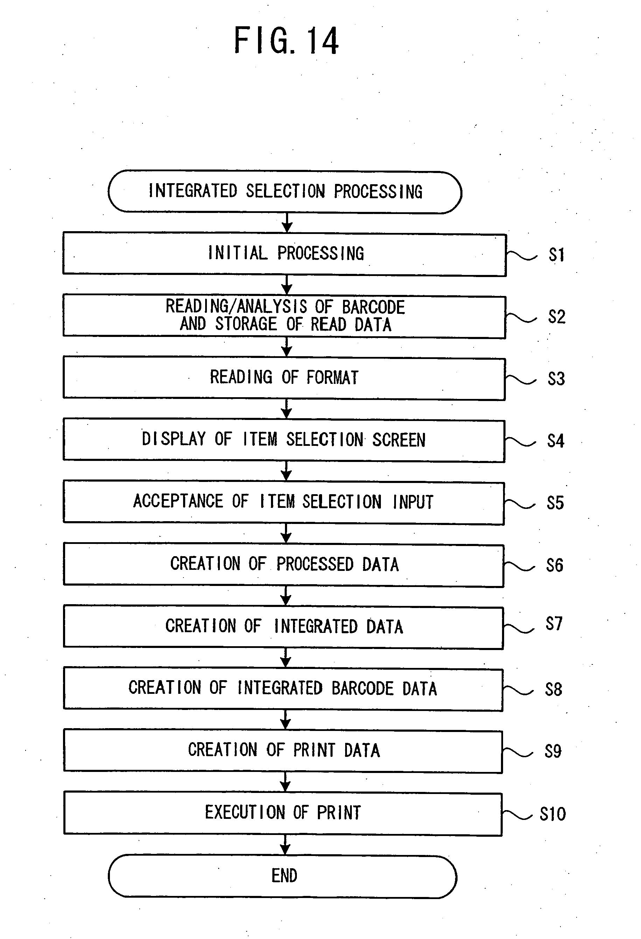

Next, integrated selection processing which executes processing of "selection of items" in the "integration processing" will be described with reference to the flowchart of FIG. 14. This processing is executed when user selects the "integration processing" through a menu screen (not shown) represented on the display 54 and further, selects "selection of items" through the integration processing menu screen. In the meantime, the menu screen indicates the "integration processing", "division processing", "subtraction processing", and other processing which the print data creation apparatus 1 executes and user executes any processing by operating the key group 53.

First, the memory areas of the selected item memory area 340, processed data memory area 345, barcode data memory area 349, print data memory area 350 and the like are initialized such as clearing (S1). Then, reading and analysis of the barcode, and store of read data are carried out (S2). More specifically, a message for urging user to read the barcode with the barcode reader 40, for example, "read barcode to be integrated" is indicated on the display 54. When the barcode reader 40 detects the barcode, a detected image is stored in the barcode image memory area 351. Then, a stored image is analyzed by a known barcode analysis processing and description information of that barcode is stored as read data in the read data memory area 371. In the meantime, assume that end of reading of all the barcodes is determined by a passage of a predetermined time interval or an instruction of terminating the reading of the barcode by user (for example, selection of a predetermined key or with an end icon displayed on the screen, selecting the end icon and the like). A format stored in the format memory area 331 is read out based on a header portion of the read data stored in the read data memory area 371 (S3). If the format of read data stored in the read data memory area 371 is different, it is permissible to end the processing with an error indicated on the display 54.

Next, an item selection screen for selecting data items constituting the integration data is created and indicated on the display 54 (S4). Data items which constitute the format read in S3 are displayed on this item selection screen so that the data items can be selected by operating the key group 53. Then, input by selection of data item by user's operation of the key group 53 is accepted and stored in the selected item memory area 340 (S5). Then, processed data containing only data items selected is created from the read data (S6). More specifically, information stored in the selected item memory area 340 is read out from read data stored in the read data memory area 371 successively and stored in the processed data memory area 345 successively. At this time, before the value of the next data item is stored and after the value of a data item is stored, an item delimiter ("*" in the examples of FIGS. 2-10) is read out from the delimiter memory area 332 and stored. Then, the integration data is created from processed data created in the processed data memory area 345 (S7). More specifically, the processed data is read from the processed data memory area 345 successively and written into the integrated data memory area 372. Here, a data delimiter ("#" in the examples of FIGS. 2-10) is stored between a processed data and the next processed data.

Barcode data for creating a barcode which adopts integration data stored in the integrated data memory area 372 as description information is created and stored in the barcode data memory area 349 (S8). In the meantime, in the case of the present embodiment, assume that the kind of the barcode and the attribute information attached to the kind of the barcode are the same as the barcode read in S2. Then, print data for printing an image of a barcode indicating the integration barcode data stored in the barcode data memory area 349 with the tape print mechanism 20 is stored (S9) in the print data memory area 350 and the drive circuits 21, 22, and the like of the tape print mechanism 20 are driven based on an instruction of print data so as to execute printing (S10). Then, this processing is ended.

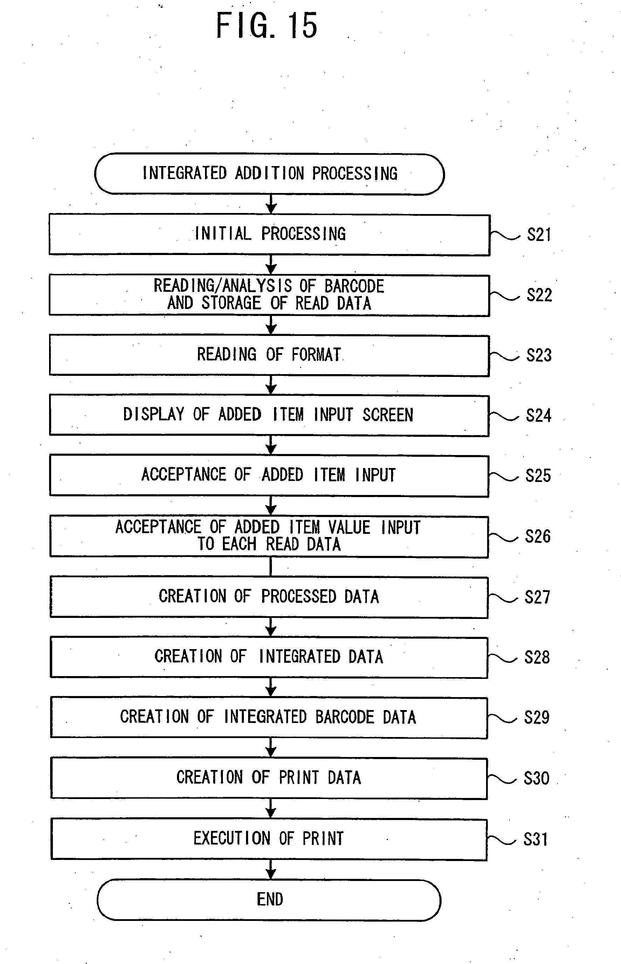

Next, integrated addition processing which executes processing of "addition of items" in the integration processing will be described with reference to the flowchart of FIG. 15. This processing is executed when user selects the "integration processing" through a menu screen (not shown) indicated on the display 54 and further, "addition of items" is selected through the integration processing menu screen.

First, the memory areas of the added item memory area 341, added item data memory area 342, processed data memory area 345, barcode data memory area 349, print data memory area 350 and the like are initialized such as clearing (S21). Then, reading and analysis of the barcode are carried out so that read data is stored in the read data memory area 371 (S22). In the meantime, assume that end of reading of all the barcodes is determined by a passage of a predetermined time interval or an instruction of terminating the reading of the barcode by user (for example, selection of a predetermined key or with an end icon displayed on the screen, selecting the end icon and the like). A format stored in the format memory area 331 is read out based on a header portion of the read data stored in the read data memory area 371 (S23). If the format of read data stored in the read data memory area 371 is different, it is permissible to end the processing with an error indicated on the display 54.

Next, item addition screen for inputting a data item to be added to the data items which constitute the integration data is created and indicated on the display 54 (S24). Data items which constitute the format read in S23 are displayed on this item addition screen. Further, an input area to which the name of an item to be added, kind of data and quantity of digits are to be input is provided so that information concerning the data items to be added can be input by operation of the key group 53. Then, input by addition of the data item by operation of the key group 53 by user is accepted and stored in the selected item memory area 340 (S25). Then, at the time of S22 where a barcode is read, input of the value of data item added in S25 is accepted for each of the read data stored in the read data memory area 371 (S26). More specifically, a content of read data, name of added data item and kind of data are indicated on the display 54 and an input area to which the value of an added data item is to be input is displayed, so that the value of added data item can be input by operation of the key group 53. Then, the input value is stored in the added item data memory area 342.

Then, processed data is created based on read data stored in the read data memory area 371 and values stored in the added item data memory area 342 (S27). Here, read data is read from the read data memory area 371 in order for each data item, a delimiter ("*" in the example of FIGS. 2-10) is inserted for each data item and finally, the item delimiter and value of the added data item are stored. The data delimiter ("#" in the example of FIGS. 2-10) is stored between the read data. The integration data is created from processed data created in the processed data memory area 345 (S28). More specifically, the processed data stored in the processed data memory area 345 is read successively and written into the integration data memory area 372. Here, a data delimiter ("#" in the example of FIGS. 2-10) is stored between a processed data and next processed data.

Then, barcode data for creating a barcode which adopts integration data stored in the integration data memory area 372 as description information is created and stored in the barcode data memory area 349 (S29). In the meantime, in the present embodiment, assume that the kind of the barcode and attribute information attached to the kind of the barcode are the same as the barcode read in S22. Then, print data for printing an image of the barcode indicated by the integration barcode data stored in the barcode data memory area 349 with the tape print mechanism 20 is stored in the print data memory area 350 (S30). Subsequently, such as the drive circuits 21 and 22 of the tape print mechanism 20 are driven based on an instruction of print data so as to execute the print (S31). Then, this processing is ended.

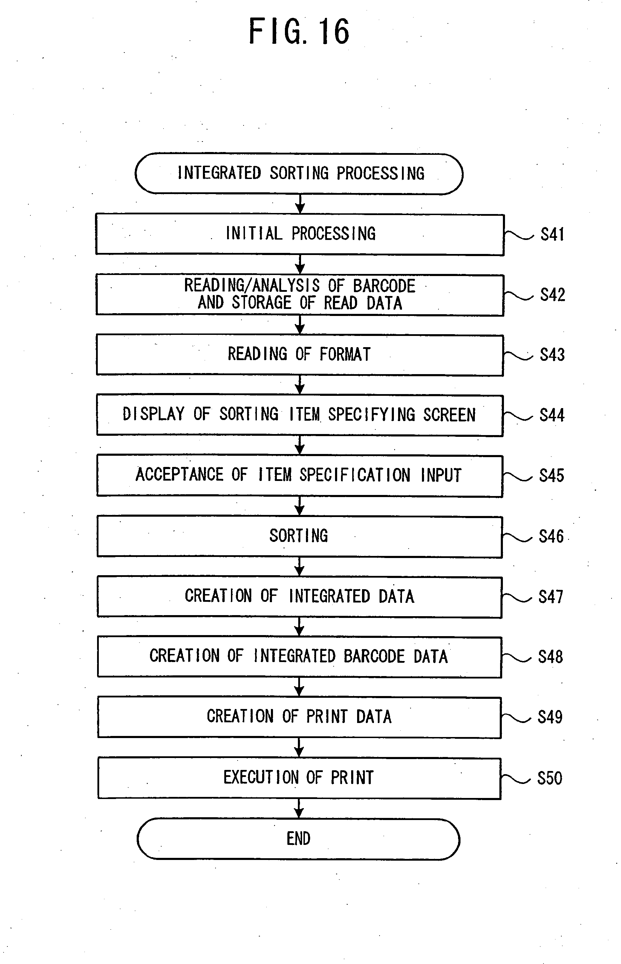

Next, integrated sorting processing which executes "sorting of data" by the "integration processing" will be described with reference to the flowchart of FIG. 16. This processing is carried out when the "integration processing" is selected by the user through a menu screen (not shown) indicated on the display 54 and further, "sorting of data" is selected through the integration processing menu screen.

First, the memory areas of the sorting information memory area 343, sorting work area 346, barcode data memory area 349, print data memory area 350, and the like are initialized such as clearing (S41). Then, reading and analysis of the barcode and storage of the read data are carried out (S42). In the meantime, assume that end of reading of all the barcodes is determined by a passage of a predetermined time interval or an instruction of terminating the reading of the barcode by the user (for example, selection of a predetermined key or with an end icon displayed on the screen, selecting the end icon and the like). A format stored in the format memory area 331 is read out based on a header portion of the read data stored in the read data memory area 371 (S43). If the format of read data stored in the read data memory area 371 is different, it is permissible to end the processing with an error indicated on the display 54.

Next, sorting item specifying screen for specifying sorting item and ascending order/descending order of the reading data is created and indicated on the display 54 (S44). Data items which constitute a format read out in S43 are indicated on this sorting item specifying screen. The same data items can be selected by operating the key group 53 and further an icon for selecting "ascending order" or "descending order" is indicated so that the sorting order can be selected. Then, selection of the sorting item and sorting order by user's operation of the key group 53 are accepted and stored in the sorting information memory area 343 (S45). Read data stored in the read data memory area 371 in order of sorting item and sorting order is sorted according to a known sorting algorithm using the sorting work area 346 (S46). This result is stored in the sorting work area 346. Then, read data after sorting stored in the sorting work area 346 is read out by each data item successively. The delimiter ("*" in the example of FIGS. 2-10) is inserted for each data item and finally, the values of the item delimiter and added data item are stored. Then, the data delimiter ("#" in the example of FIGS. 2-10) is stored between the read data and read data. Then, the integration data is created from processed data created in the processed data memory area 345 (S47).

Then, barcode data for creating a barcode which adopts integration data stored in the integration data memory area 372 as description information is created and stored in the barcode data memory area 349 (S48). In the meantime, in the present embodiment, assume that the kind of the barcode and attribute information attached to the kind of the barcode are the same as the barcode read in S42. Then, print data for printing an image of the barcode indicated by the integration barcode data stored in the barcode data memory area 349 with the tape print mechanism 20 is stored in the print data memory area 350 (S49). Subsequently, such as the drive circuits 21 and 22 of the tape print mechanism 20 are driven based on an instruction of print data so as to execute the print (S50). Then, this processing is ended.

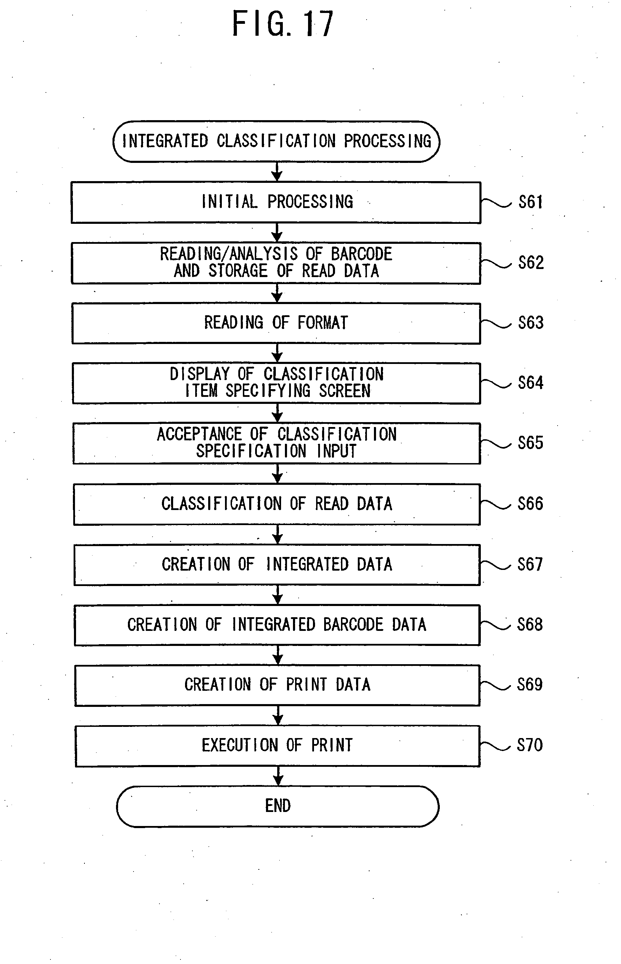

Next, integrated classification processing which executes "classification of data" by "integration processing" will be described with reference to the flowchart of FIG. 17. This processing is executed when the "integration processing" is selected by the user through a menu screen (not shown) indicated on the display 54 and the "classification of data" is selected through the integration processing menu screen.

First, the memory areas of the classification item memory area 344, comparison work area 348, barcode data memory area 349, print data memory area 350, and the like are initialized such as by clearing (S61). Then, reading and analysis of the barcode and storage of the read data are carried out (S62). In the meantime, assume that end of reading of all the barcodes is determined by a passage of a predetermined time interval or an instruction of terminating the reading of the barcode by user (for example, selection of a predetermined key or with an end icon displayed on the screen, selecting the end icon and the like). A format stored in the format memory area 331 is read out based on a header portion of the read data stored in the read data memory area 371 (S63). If the format of read data stored in the read data memory area 371 is different, it is permissible to end the processing with an error indicated on the display 54.

Next, classification item specifying screen for specifying the classification items of read data is created and indicated on the display 54 (S64). Data items which constitute a format read out in S63 are displayed on this classification item specifying screen so that the data item can be selected by operating the key group 53. Then, selection of the classification item by user's operation of the key group 53 is accepted and stored in the classification item memory area 344 (S65). Read data stored in the read data memory area 371 is classified based on the value of the classification item and stored in the classification work area 347 by each classification item value (S66). Of the read data stored in the classification work area 347, the values of the data items are read out in order by each classified read data. Then, the delimiter ("*" in the example of FIGS. 2-10) is inserted for each data item and the data delimiter ("#" in the example of FIGS. 2-10) is inserted between the read data and the read data. These are stored in the integration data memory area 372 (S67).

Then, barcode data for creating a barcode which adopts integration data stored in the integration data memory area 372 as description information is created and stored in the barcode data memory area 349 (S68). In the meantime, in this embodiment, assume that the kind of the barcode and attribute information attached to the kind of the barcode are the same as the barcode read in S62. Then, print data for printing an image of the barcode indicated by the integration barcode data stored in the barcode data memory area 349 with the tape print mechanism 20 is stored in the print data memory area 350 (S69). Subsequently, such as the drive circuits 21 and 22 of the tape print mechanism 20 are driven based on an instruction of print data so as to execute the print (S70). Then, this processing is ended.

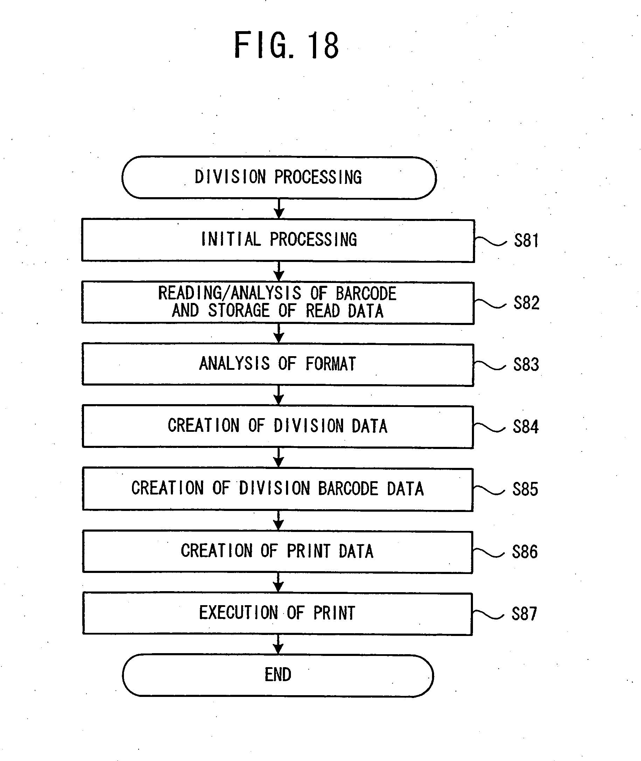

Next, the "division processing" will be described with reference to the flowchart of FIG. 18. This processing is executed when the "division processing" is selected by the user through a menu screen (not shown) indicated on the display 54.

First, the memory areas of the division data memory area 373, the processed data memory area 345, barcode data memory area 349, print data memory area 350 and the like are initialized such as by clearing (S81). Then, when a barcode is detected by the barcode reader 40, a detected image is stored in the barcode image memory area 351 and the stored image is analyzed by known barcode analysis processing and then, the description information of the barcode is stored in the read data memory area 371 as read data (S82). Then, the format is analyzed based on the delimiter of the read data (S83).

Next, read data stored in the read data memory area 371 is divided at the position of a data delimiter and stored in the division data memory area 373 as each different data (S84). Barcode data for creating a barcode which adopts the division data stored in the division data memory area 373 as description information is created and stored in the barcode data memory area 349 (S85). In the meantime, in this embodiment, assume that the kind of the barcode and attribute information attached to the kind of the barcode are the same as the barcode read in S82. Then, print data for printing an image of the barcode indicated by the integration barcode data stored in the barcode data memory area 349 with the tape print mechanism 20 is stored in the print data memory area 350 (S86). Subsequently, such as the drive circuits 21, 22 of the tape print mechanism 20 are driven based on an instruction of print data so as to execute the print (S87). Then, this processing is ended.

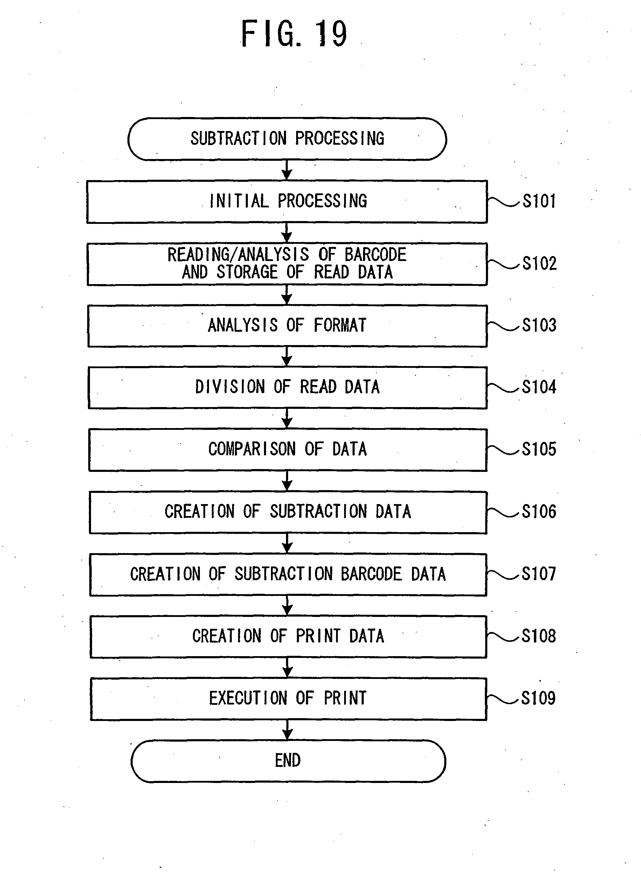

"Subtraction processing" will be described with reference to the flowchart of FIG. 19. This processing is executed when "subtraction processing" is selected by the user through a menu screen (not shown) indicated on the display 54.

First, the memory area of the division data memory area 373, processed data memory area 345, barcode data memory area 349, print data memory area 350 and the like are initialized such as clearing (S101). Then, when two barcodes are detected by the barcode reader 40, a detected image is stored in the barcode image memory area 351 and the stored image is analyzed by known barcode analysis processing and then, the description information of the barcode is stored in the read data memory area 371 as read data (S102). Then, the format is analyzed based on the delimiter of the read data (S103). If formats of the two read data stored in the read data memory area 371 are different, the processing may be ended with an error indicated on the display 54.

Next, two read data stored in the read data memory area 371 are divided at each position of the data delimiter and stored in the comparison work area 348 as each different data (S104). Consequently, a data group created from a first read data and a data group created from a second read data are stored in the comparison work area 348. Then, the two data groups stored in the comparison work area 348 are compared with each other and data which does not exist in the second data group although it exists in the first data group is extracted and stored in the comparison work area 348 (S105). Further, data which does not exist in the first data group although it exists in the second data group is extracted and stored in the comparison work area 348. In the meantime, this extracted data is called "extracted data".

Then, two subtraction data are created from two extracted data groups stored in the comparison work area 348 and stored in the subtraction data memory area 374 (S106). Then, barcode data for creating a barcode which adopts subtraction data stored in the subtraction data memory area 374 as description data is created and stored in the barcode data memory area 349 (S107). In the meantime, in this embodiment, assume that the kind of the barcode and attribute information attached to the kind of the barcode are the same as the barcode read in S102. Then, print data for printing an image of the barcode indicated by the integration barcode data stored in the barcode data memory area 349 with the tape print mechanism 20 is stored in the print data memory area 350 (S108). Subsequently, such as the drive circuits 21 and 22 of the tape print mechanism 20 are driven based on an instruction of print data so as to execute the print (S109). Then, this processing is ended.

As in the above-described processing executed, the integration barcode, division barcode and subtraction barcode may be created by editing read data obtained by reading the barcode in various ways. Therefore, the barcode of an edited data can be output without edition of read data at a terminal such as personal computer.

Needless to say, the print data creation apparatus of the present disclosure is not restricted to the above-described embodiments but may be modified in various ways within a range not departing from the subject of the disclosure. Although, in the above-described embodiments, the QR code has been exemplified as the barcode, the two-dimensional barcode or other kinds of barcode may be adopted.

Although, in the above embodiment, the barcode is read when read data is edited with the print data creation apparatus 1, the barcode does not always need to be read when being edited but read data which has been read preliminarily and stored may be edited. Further, for example, the print data creation apparatus 1 is not provided with the barcode reader 40 and may obtain only read data obtained by reading the barcode from an external unit or a recording medium and edit so as to create the integration data, division data or subtraction data.

Although, in the above embodiment, the read data is edited with the print data creation apparatus 1 and when the integration data, division data or subtraction data (edited data) are created, barcode data for creating the barcode containing these data is created to create print data and then, print is executed, it is permissible to store edited data created in the EEPROM 37 instead of creating the barcode data when the edited data are created and read the edited data when an instruction for printing or an instruction for creating the print data is given by the user so as to create the barcode data. Further, it is permissible to create the barcode data and store in the EEPROM 37 and then read them when an instruction for printing or an instruction for creating the print data is given by the user so as to create the print data.

Although, in the above embodiment, only one kind of edition is executed, a plurality of editions may be executed at the same time. For example, the item may be added as well as selected. Further, data may be sorted and classified. Needless to say, in dividing the data, selection of the item, addition of the item, sorting of data and classification of data may be carried out. Although when adding the item, the item is added after an existing item, the user may specify an addition position. When selecting the item, the order of the items may be changed.

Although in the above embodiment, a format preliminarily stored in the format memory area 332 is used, this format may not be stored preliminarily. In this case, a barcode which contains information for specifying the format as description information is printed preliminarily near barcode whose data is desired to be handled and before the barcode of the data is read, the barcode of the format is read so as to fetch in information of the format. Further, it is permissible to handle only barcode containing data in which the delimiters are inserted as description information and analyze the format with the delimiters. In this case, in order to represent a name of data item, it is necessary to have the name of the data item as data content together with the delimiters.

Although, in the above embodiment, "#" is used as data delimiter and "*" is used as item delimiter, the value as the delimiter is not restricted to these. Symbols such as "*", "$", "%", "&" and the like may be used and words such as "data", "field" may be used.

Although, in the "integration processing", the format of the read data is stored in the format memory area 331 of the ROM 33 preliminarily, instead of storing the format preliminarily, it is permissible to read the barcode containing data in which data delimiter "#" and item delimiter "*" are inserted as description information so as to acquire the read data and analyze the data delimiter and item delimiter so as to create the format. Further, in the above embodiment, the data item may be constructed hierarchically. For example, "home telephone number", "mobile phone number" and "office telephone number" are provided in the lower layer of data item "telephone number". In this case, to indicate the hierarchical structure, a symbol different from the item delimiter in the uppermost layer is used. For example, assume that the data item "birth date" comes in 8-digit numeral followed by data item "telephone number" and this "telephone number" has the aforementioned data item in the lower layer and further other data items follow. In this case, assuming that the "birth date" is "19730224", "home telephone number" is "0533851234", data "office telephone number" is "0529876543", and "mobile phone number" is "09088887777", data "19730224*0533851234#0529876543#09088887777*..." is created.

Although, in the above embodiment, for "classification of data", data which exists on one side but does not exit on the other are gathered to create the classification barcode, it is permissible to edit a barcode having common data items and different data items although the quantity of data and data objects existing in two barcodes are equal to create a barcode constituted of predetermined data items. For example, assume that the read data of a first barcode is constituted of "student ID number", "name", "address" and "telephone number" as data items and the read data of a second barcode is constituted of "student ID number" and "marks ("Japanese language", "mathematics", "science", "social science", "English" in the lower layer) as data items. Then, by editing the two barcodes, the barcode constituted of "student ID number", "name", "marks ("Japanese language", "mathematics", "science", "social science", "English" in the lower layer) as the data items is created. A necessary data item may be specified by the user or may be specified preliminarily.

According to the barcode print data creation apparatus and barcode print data creation program of the present disclosure, a barcode can be created from a plurality of barcodes having the same format. Because the apparatus and program enable editing different from just duplication or synthesis to be performed by adding a data item or selecting a data item, application of the barcode to be created can be expanded. For example, a barcode in which only some data items of read data are gathered or a barcode containing data in which new data item data is added to each read data can be created.

According to the barcode print data creation apparatus and barcode print data creation program of the present disclosure, a plurality of barcodes can be created from a single barcode. For example, data contained in a barcode may be divided into a plurality of data so as to create each barcode. Further, data contained in a plurality of the barcodes may be edited to create plural different barcodes. Consequently, the application of created barcode can be expanded.

According to the barcode print data creation apparatus and barcode print data creation program of the present disclosure, a single barcode may be created from a plurality of the barcodes having the same format or a plurality of barcodes may be created from a single barcode. When creating a single barcode from the plurality of the barcodes, editing different from just duplication or synthesis can be performed by adding a data item or selecting a data item. Consequently, the application of the barcode to be created can be expanded. For example, a barcode in which only some data items in read data are gathered or a barcode containing data in which new data item data is added to each read data can be created. For example, data contained in a barcode may be divided into a plurality of data so as to create each barcode. Further, data contained in a plurality of barcodes may be edited to create plural different barcodes. Consequently, the application of created barcode can be expanded.

## Claims

1. A barcode print data creation apparatus (1) comprising:
a read data memory unit (371) that is adapted to store a plurality of read data (201, 202, 203) obtained by reading a barcode (101, 102, 103);
a data format memory unit (331) that is adapted to store a data format constituted of data items for dividing and discriminating the values of the read data (201, 202, 203) stored in the read data memory (371) unit by each item; and
a control unit (31) that is adapted to execute at least one of selection processing of selecting at least a data item from the data items of the data format stored in the data format memory unit (331) and addition processing of adding a new data item to the data format;
edit a value corresponding to the data item selected or added by each of the processings about the plural read data (201, 202, 203) stored in the read data memory unit (371) so as to edit the plural read data (201, 202, 203) into a single integrated data (401);
create integrated barcode data (651) for creating integration barcode (601) describing the integration data (401) edited; and to
create barcode print data (501) for printing the integration barcode (601) based on the integration barcode data (651) created.

2. The barcode print data creation apparatus (1) according to claim 1 wherein
the control unit (31) further is adapted to
specify the data item selected by the selection processing from the data items of the data format stored in the data format memory unit (331); and to
create the integration data (401) by editing values corresponding to the data item specified by the plural read data (201, 202, 203).

3. The barcode print data creation apparatus (1) according to claim 2 or 3, wherein
the control unit (31) further is adapted to
specify a data item to be added to the data format stored in the data format memory unit (331) by the addition processing;
input a value corresponding to an addition data item which is the data item specified corresponding to each of the plural read data (201, 202, 203); and to
create the integration data (401) from values corresponding to the read data (201, 202, 203) stored in the read data memory unit (371) and the input addition data item.

4. The barcode print data creation apparatus (1) according to any one of claims 1 to 3, wherein
the control unit (31) further is adapted to
sort the read data (201, 202, 203) described in the integration data (401) in ascending order or descending order of values corresponding to a predetermined data item; and to
create the integration data (401) by arranging the values of the read data (201, 202, 203) in a sorted order.

5. The barcode print data creation apparatus (1) according to claim 4 wherein
the control unit (31) further is adapted to
specify the predetermined data item and order of sorting which serve as a reference of the sorting.

6. The barcode print data creation apparatus (1) according to any one of claims 1 to 5, further comprising
a barcode reading unit (40) that is adapted to read the barcode, wherein
the control unit (31) further is adapted to
extract information described in the barcode from an image of the read barcode (101, 102, 103); and to
store the extracted information in the read data memory unit (371) as the read data.

7. The barcode print data creation apparatus (1) according to any one of claims 1 to 6, further comprising
a print unit (20) that prints the barcode print data (501) created by the control unit (31).

8. A barcode print data creation apparatus (1) comprising:
a read data memory unit (371) that stores read data (210) obtained by reading a barcode (110); and
a control unit (31) that is adapted to
edit a plurality of division data (701, 702, 703) by dividing the read data (210) stored in the read data memory unit (371);
create division barcode data (851, 852, 853) for creating the division barcode (801, 802, 803) describing each of the edited division data (701, 702, 703); and to
create the barcode print data (541) for printing the division barcode (801, 802, 803) based on the division barcode data (851, 852, 853) created.

9. The barcode print data creation apparatus (1) according to claim 8 or 9, further comprising:
a data format memory unit (331) that is adapted to store a data format constituted of data items for dividing and discriminating the values of the read data (210) stored in the read data memory unit (371) by each item, wherein
the control unit(31) further is adapted to divide the read data (210) based on the data items of the data format stored in the data format memory unit (331).

10. The barcode print data creation apparatus (1) according to any one of claims 8 to 10, wherein
the control unit (31) further is adapted to
specify the data item to be selected of the data items in the data format stored in the data format memory unit (331); and to
create the division data (701, 702, 703) based on a specified data item of the read data (210).

11. The barcode print data creation apparatus (1) according to any one of claims 8 to 10, wherein
the control unit (31) further is adapted to
specifiy a data item to be added to the data format stored in the data format memory unit (331);
input a value corresponding to an addition data item which is the specified data item; and to
create the division data (701, 702, 703) from values corresponding to the read data (210) stored in the read data memory unit (371) and the input addition data item.

12. The barcode print data creation apparatus (1) according to any one of claims 8 to 11, wherein
all the division data (701, 702, 703) are of the same data format.

13. The barcode print data creation apparatus (1) according to claim 12 wherein
the data format of the division data (701, 702, 703) includes at least one of the data item specified by the control unit (31) and the addition data item specified by the control unit (31).

14. The barcode print data creation apparatus (1) according to any one of claims 8 to 13, wherein
the control unit (31) further is adapted to
sort the division data (701, 702, 703) in the ascending order or descending order of values corresponding to predetermined data items when creating the division data (701, 702, 703) and to
create barcode print data (541) so that the barcode data (851, 852, 853) are printed in a sorted order.

15. The barcode print data creation apparatus (1) according to claim 14 wherein
the control unit (31) further is adapted to specify the predetermined data items and sorting order which serve as reference of sorting.

16. The barcode print data creation apparatus (1) according to any one of claims 8 to 15, further comprising
a barcode reading unit (40) that is adapted to read the barcode (110), wherein
the control unit (31) further is adapted to
extract information described in the barcode (110) from an image of the read barcode; and to
store the extracted information in the read data memory unit (371) as the read data (210).

17. The barcode print data creation apparatus (1) according to any one of claims 8 to 16, further comprising
a print unit (20) that prints the barcode print data (541) created by the control unit (31).

18. A barcode print data creation apparatus (1) comprising:
a read data memory unit (371) that is adapted to store a plurality of read data (201, 202, 203) obtained by reading a barcode (101, 102, 103);
a data format memory unit (331) that is adapted to store a data format constituted of data items for dividing and discriminating the values of the read data (201, 202, 203) stored in the read data memory unit (371) by each item; and
a control unit that is adapted to
execute at least one of selection processing of
selecting at least a data item from the data items of the data format stored in the data format memory unit (331) and addition processing of adding a new data item to the data format;
edit a value corresponding to the data item selected or added by each of the processings about the plural read data (201, 202, 203) stored in the read data memory unit (371) so as to edit the plural read data (201, 202, 203) into a single integration data;
create integration barcode data (651) for creating integration barcode (601) describing the edited integration data (401);
edit the read data (201, 202, 203) stored in the read data memory unit (371) by dividing so as to edit the plural division data;
create division barcode data for creating division barcode each describing the division data edited by dividing; and to
create barcode print data for printing the integration barcode based on the integration barcode data created or to
create barcode print data for printing the division barcode based on the division barcode data created.

19. A barcode print data creation program stored in a computer readable recording medium of:
storing a plural read data obtained by reading a barcode;
performing at least one of selection processing of selecting at least a data item from the data items in the data format constituted of data items for dividing and discriminating the values of the stored read data by each item and addition processing of adding a new data item to the data format;
editing a value corresponding to the data item selected or added by each of the processings about the plural read data stored so as to edit the plural read data into a single integration data;
creating the integration barcode data for creating the integration barcode describing the edited integration data; and
creating the barcode print data for printing the integration barcode based on the created integration barcode data.

20. The barcode print data creation program according to claim 19 of:
specifying the data item selected by the selection processing from the data items in the data format; and
creating the integration data by editing a value corresponding to the data item specified for each of the plural read data.

21. The barcode print data creation program according to claim 19 or 20, of:
specifying a data item to be added to the data format by the addition processing;
inputting a value corresponding to the addition data item which is the specified data item, corresponding to each of the plural read data; and
creating the integration data from values corresponding to the stored read data and the input addition data item.

22. The barcode print data creation program according to any one of claims 19 to 21, of:
sorting the read data described in the integration data in ascending order or descending order of values corresponding to a predetermined data item and
creating the integration data by arranging the values of the read data in a sorted order.

23. The barcode print data creation program according to claim 22 of:
specifying the predetermined data item and order of sorting which serve as a reference of the sorting.

24. The barcode print data creation program according to any one of claims 19 to 23, of:
reading the barcode;
extracting information described in the barcode from an image of the barcode read; and
storing the extracted information as the read data.

25. The barcode print data creation program according to any one of claims 19 to 24, of printing the created barcode print data.

26. A barcode print data creation program recorded in a computer readable recording medium, of:
storing read data obtained by reading a barcode;
editing a plurality of division data by dividing the stored read data;
creating division barcode data for creating the division barcode describing each of the edited division data; and
creating the barcode print data for printing the division barcode based on the created division barcode data.

27. The barcode print data creation program according to claim 26 of dividing the read data based on the data items in the data format constituted of data items for dividing and discriminating the values of the stored read data by each item.

28. The barcode print data creation program according to claim 26 or 27, of:
specifying the data item to be selected from the data items in the stored data format; and
creating the division data based on the specified data item in the read data.

29. The barcode print data creation program according to any one of claims 26 to 28, of:
specifying a data item to be added to the stored data format;
inputting a value corresponding to the addition data item which is the specified data item; and
creating the division data from values corresponding to the stored read data and the input addition data.

30. The barcode print data creation program according to any one of claims 26 to 29, wherein all the division data are of the same data format.

31. The barcode print data creation apparatus according to claim 30 wherein the data format of the division data includes at least one of the specified data item and the specified addition data item.

32. The barcode print data creation program according to any one of claims 26 to 31, of sorting the division data in the ascending order or descending order of values corresponding to predetermined data items when creating the division data and creating the barcode print data so that the barcode data are printed in a sorted order.

33. The barcode print data creation program according to claim 32 of specifying the predetermined data items and sorting order which serve as reference of sorting.

34. The barcode print data creation program according to any one of claims 26 to 33, of reading the barcode;
extracting information described in the barcode from an image of the read barcode;
storing the extracted information as the read data.

35. The barcode print data creation program according to any one of claims 26 to 34, of printing the created barcode print data.

36. A barcode print data creation program recorded in a computer readable recording medium, of:
storing a plurality of read data obtained by reading a barcode;
executing at least one of selection processing of selecting at least a data item from the data items in the data format constituted of data items for dividing and discriminating the values of the stored read data by each item and addition processing of adding a new data item to the data format;
editing a value corresponding to the data item selected or added by each of the processings about the plural stored read data so as to edit the plural read data into a single integration data;
creating integration barcode data for creating integration barcode describing the edited integration data;
editing the stored read data by dividing so as to edit the plural division data;
creating division barcode data for creating division barcode each describing the edited division data by dividing; and
creating barcode print data for printing the integration barcode based on the created integration barcode data or
creating barcode print data for printing the division barcode based on the created division barcode data.
